# NEUE EUROPÄISCHE PATENTSCHRIFT

(11) **EP 3 613 814 B2**
(45) Veröffentlichungstag und Bekanntmachung des Hinweises auf die Entscheidung über den Einspruch: **18.10.2023**
(45) Hinweis auf die Patenterteilung: 21.10.2020
(21) Anmeldenummer: 18190272.7
(22) Anmeldetag: 22.08.2018
(51) Int. Cl.: C09D 11/00, B43K 8/02, B43K 1/00, C09D 11/03, C09D 11/037, C09D 11/16, C09D 11/17

(54) **SCHREIB-, MARKIER- UND/ODER ZEICHENFLÜSSIGKEIT FÜR KAPILLARSYSTEME, INSBESONDERE FÜR AUFTRAGSGERÄTE MIT EINEM KAPILLARSYSTEM, UND AUFTRAGSGERÄT**
WRITING, MARKING AND/OR CHARACTER LIQUID FOR CAPILLARY SYSTEMS, IN PARTICULAR FOR APPLICATORS WITH A CAPILLARY SYSTEM, AND APPLICATOR
LIQUIDE D'ÉCRITURE, DE MARQUAGE ET / OU DE SIGNALISATION POUR SYSTÈMES CAPILLAIRES, EN PARTICULIER POUR APPAREILS D'APPLICATION DOTÉS D'UN SYSTÈME CAPILLAIRE ET APPAREIL D'APPLICATION

(43) Veröffentlichungstag der Anmeldung: 26.02.2020
(73) Patentinhaber: Faber-Castell AG, 90546 Stein (DE)
(72) Erfinder: Schwarz, Wolfgang, 91623 Sachsen bei Ansbach (DE); Lugert, Gerhard, 90431 Nürnberg (DE); Goschala, Concetta, 90449 Nürnberg (DE)
(74) Vertreter: Schlögl, Markus

(56) Entgegenhaltungen:
- EP-A1- 2 354 193
- US-A1- 2012 070 584
- US-A1- 2013 068 131

## Beschreibung

Die Erfindung betrifft eine Schreib-, Markier- und/oder Zeichenflüssigkeit für Kapillarsysteme, insbesondere für Auftragsgeräte mit einem Kapillarsystem, und ein Auftragsgerät, in welchem eine solche Schreib-, Markier- und/oder Zeichenflüssigkeit verwendet wird.

Für Künstleranwendungen sind seit vielen Jahren pigmentierte Schreib-, Markier- und/oder Zeichenflüssigkeiten bzw. pigmentierte Tinten bekannt. Diese werden häufig mit Kunststoffdispersionen auf Acrylat- oder Polyurethan-Basis als Bindemittel sowie mit Netzmitteln formuliert. Solche Schreib-, Markier- und/oder Zeichenflüssigkeiten werden über sogenannte Ventilsysteme oder Kapillarsysteme auf saugende Untergründe, bevorzugt auf Papier oder Zeichenkarton, appliziert. Nach Antrocknen der Schreib-, Markier- und/oder Zeichenflüssigkeit auf dem Untergrund, besitzen die Farbaufträge eine Permanenz gegenüber Wasser oder höchstens eine Teilwasserlöslichkeit, d. h. die aufgetragenen, mit der Schreib, Mal- oder Zeichenspitze applizierten Farbaufträge sind nach Kontakt mit Wasser noch zu sehen und sind nicht vollständig aufgelöst. Dies ist darauf zurückzuführen, dass die Pigmente zusammen mit dem Bindemittel in den saugenden Untergrund migrieren und somit nur schwer wieder herausgelöst werden können. Für viele künstlerische Anwendungen ist dieser Effekt gewünscht. Bei Hobbykünstlern oder professionellen Künstlern sind jedoch auch Aquarelltechniken als Anwendung bekannt. Für diese Anwendungen stehen sogenannte Aquarellfarben in Form von Tabletten zur Verfügung. Eine Applikation der Aquarellfarben erfolgt daher üblicherweise über Pinsel.

Eine Applikation von Aquarellfarben über Kapillarsysteme, insbesondere über Auftragsgeräte mit Kapillarsystemen ist bisher aufgrund der typischerweise hohen Viskositäten > 50 cP (Brookfield, 20 °C, Kegel-Platte CPE-40) von Aquarellfarben kaum möglich. Solche hochviskosen Schreib-, Markier- und/oder Zeichenflüssigkeiten lassen sich zumeist mittels Auftragsgeräten bzw. Schreib-, Markier- oder Zeichengeräten, die ein sogenanntes Ventilsystem aufweisen, applizieren. Hierbei ist die Schreib-, Markier- und/oder Zeichenflüssigkeit als frei fließende Flüssigkeit in ein Reservoir innerhalb des Schaftes gefüllt und eine Flüssigkeitsabgabe erfolgt über eine Schreib-, Markier- oder Zeichenspitze, vorzugsweise aus Polyester- oder Acrylfasern oder auch aus gesinterten Polyolefinen. Zur geregelten Flüssigkeitsabgabe ist zwischen der Spitze und dem Reservoir ein Ventil vorgesehen. Um vor der Applikation der Schreib-, Markier- und/oder Zeichenflüssigkeit durch Schütteln des Auftragsgeräts eine Homogenisierung der Schreib-, Markier- und/oder Zeichenflüssigkeit herbeizuführen, werden häufig eine oder mehrere Mischkugeln in dem Reservoir eingesetzt.

In Kapillarsystemen eingesetzte Flüssigkeiten müssen zur Sicherstellung einer ausreichenden Applikation sehr geringe Viskositäten von kleiner 50 mPas, bevorzugt jedoch kleiner 20 mPas (Brookfield, 20 °C, Kegel-Platte CPE-40) besitzen. Auftragsgeräte, in welchen solche Schreib-, Markier- und/oder Zeichenflüssigkeiten eingesetzt werden, umfassen einen Schaft, typischerweise ein Kunststoff- oder Metallgehäuse, auf welchen im Nichtgebrauchszustand eine Verschlusskappe aufgesteckt wird. Innerhalb des Schaftes ist ein Speicher für die Schreib-, Markier- und/oder Zeichenflüssigkeit aus einem kapillaren Material, beispielsweise aus Polyester- oder Polyolefinfasern angeordnet, der mit einem Auftragselement bzw. einer Schreib-, Markier- oder Zeichenspitze aus einem ebenfalls kapillaren Material, z.B. einer Faser- oder Sinterspitze fluidisch verbunden ist, sodass die Schreib-, Markier- und/oder Zeichenflüssigkeit aufgrund von Adhäsionskräften bzw. aufgrund des Kapillareffektes aus dem Speicher an die Spitze des Auftragselementes transportiert werden kann.

Aus EP 2 354 193 A1 ist eine Schreib-, Markier- und Zeichenflüssigkeit aus Wasserbasis bekannt, welche ein in gelöster Form vorliegendes Maleinatharz, Farb- und Metallpigmente, Feuchthaltemittel sowie weitere Additive enthält.

In US 2012/0070584 A1 ist eine Markierflüssigkeit beschrieben, die wässrige Lösungsmittel mit darin gelösten Farbmitteln sowie ein das Verschmieren des erzeugten Abstriches verhinderndes Mittel und weitere Additive enthält.

US 2013/0068131 A1 offenbart eine wässrige Tinte für einen Drucker, in welcher Polyacrylate und Polyurethane als Bindemittel eingesetzt werden.

Es ist Aufgabe der Erfindung eine Schreib-, Markier- und/oder Zeichenflüssigkeit für Kapillarsysteme, insbesondere für Auftragsgeräte mit Kapillarsystemen anzugeben, die hinsichtlich der geschilderten Nachteile und Probleme verbessert ist. Ferner ist es Aufgabe der Erfindung ein Auftragsgerät, insbesondere ein Auftragsgerät mit einem Kapillarsystem anzugeben, in welchem die Schreib-, Markier- und/oder Zeichenflüssigkeit zum Einsatz kommt.

Die Aufgabe wird gelöst mit einer wässrigen, pigmentierten und aquarellierbaren Schreib-, Markier- und/oder Zeichenflüssigkeit für Kapillarsysteme, insbesondere für Auftragsgeräte mit einem Kapillarsystem, mit den Merkmalen gemäß Anspruch 1. Die Schreib-, Markier- und/oder Zeichenflüssigkeit weist eine Viskosität von weniger als 40 mPas, insbesondere weniger als 10 mPas (Brookfield, 20 °C, Kegel-Platte CPE-40) auf und enthält zumindest eine wässrige Pigmentpräparation, zumindest ein Bindemittel, zumindest eine Base und zumindest ein Dispergiernetzmittel, wobei als Dispergiernetzmittel eine wässrige Lösung eines modifizierten Polymers mit pigmentaffinen Gruppen enthalten ist. Das Bindemittel ist ein wasserlösliches Harz und/oder eine Kunststoffdispersion aus der Gruppe modifizierter, niedermolekularer Maleinatharze und/oder eine Kunststoffdispersion aus der Gruppe Styrolacrylharze und/oder ein gesättigtes Polyesterharz. Ferner enthält die Schreib-, Markier- und/oder Zeichenflüssigkeit zumindest einen Zucker und/oder einen Zuckeralkohol.

Die Schreib-, Markier- und/oder Zeichenflüssigkeit ist somit eine Tinte auf Wasserbasis, in der Pigmente enthalten sind und deren Farbaufstriche aquarellierbar sind, d.h. diese lassen sich nach Applikation und Antrocknen durch Kontakt mit Wasser, beispielsweise mit einem feuchten Pinsel oder Schwamm, weiter behandeln. Dadurch ist es möglich, im Nachhinein noch Korrekturen der applizierten Farbe vorzunehmen und diese wie bei Aquarelltechniken üblich, zu verteilen und die entsprechenden Techniken, wie Lavieren oder Lasieren, anzuwenden. Diese Fähigkeit ist auf das verbesserte Migrationsverhalten der Auftragsflüssigkeit zurückzuführen, d.h. die Pigmentpartikel dringen nicht oder weniger in die Mal- oder Zeichenunterlage ein, sondern bleiben vermehrt an der Papieroberfläche haften. Bei einer nachfolgenden Behandlung, z.B. mittels eines feuchten Pinsels können diese dann auf der Mal- oder Zeichenunterlage verteilt werden, um Farbeffekte zu erreichen.

Ein erfindungsgemäß eingesetztes Dispergiernetzmittel bzw. eine solche wässrige Lösung eines modifizierten Polymers mit pigmentaffinen Gruppen ist beispielsweise unter dem Handelsnamen Tego Dispers 750W ¹⁾ erhältlich. Gerade bei der Verwendung eines solchen Dispergiernetzmittels ist eine Sedimentation der Pigmente kaum zu beobachten und die Schreib-, Markier- und/oder Zeichenflüssigkeit zeigt eine sehr gute Lagerstabilität. Dadurch kann diese über einen längeren Zeitraum hinweg in Auftragsgeräten mit Kapillarsystem verwendet werden, ohne dass störende Ablagerungen innerhalb des Kapillarsystems auftreten, welche die Kapillarkanäle verstopfen können.

In der wässrigen Pigmentpräparation liegen die Pigmente bereits dispergiert vor, und können direkt zur Herstellung der Schreib-, Markier- und/oder Zeichenflüssigkeit eingesetzt werden. Als wässrige Pigmentpräparationen werden beispielsweise unter den Handelsnamen Hostatint ²⁾, Colanyl ³⁾, Cosmenyl ⁴⁾, Hostafine ⁵⁾, Heucosperse ⁶⁾ oder der Gruppe Levanyl ⁷⁾ vertriebene Pigmentpräparationen eingesetzt.

Durch die niedrige Viskosität < 40 mPas, vorzugsweise sogar < 10 mPas der Schreib-, Markier- und/oder Zeichenflüssigkeit ist eine Applikation über Kapillarsysteme möglich.

Als Bindemittel wird beispielsweise ein modifiziertes, oxidationsstabiles Maleinatharz eingesetzt, welches die folgenden Eigenschaften aufweist:

| | |
|---|---|
| Schmelzpunkt (Kofler-Heizbank, 6 min): | 135 ± 10°C |
| Viskosität (Auslaufzeit 60% Ethanol/20°C; 4 DIN 53211): | 75 - 125 s |
| Säurezahl (DIN ISO EN 2114): | 160- 200 mg KOH/g |
| Farbzahl (Gardener Color Standard; 50% Ethanol ASTM D 1544): | max. 10 |
| Dichte (Lieferform 20°C): | ca. 1,1 g/cm3 |
| Hydroxylzahl (DIN 53240): | ca. 140 mg KOH/g |

Ein solches Maleinatharz ist beispielsweise unter dem Handelsnamen ERKAMAR 4170 ⁸⁾ erhältlich.

Ferner kommt als Bindemittel beispielsweise ein gesättigtes Polyesterharz mit folgender Spezifikation zum Einsatz:

| | |
|---|---|
| Schmelzpunkt (Kofler-Heizbank, 6 min): | 70 ± 5°C |
| Viskosität (Auslaufzeit 60% Ethanol/20°C; 4 DIN 53211): | 50 - 80 s |
| Säurezahl (DIN ISO EN 2114): | 90 - 100 mg KOH/g |
| Farbzahl (Iodfarbzahl; 50% Ethanol DIN 6162): | max. 2 mgl/100ml |
| Dichte (Lieferform 20°C): | ca. 1,25 g/cm3 |

Ein solches Polyesterharz ist beispielsweise unter dem Handelsnamen ROKRAPOL 7095 ⁹⁾ erhältlich.

Beispiele für als Bindemittel eingesetzte Kunststoffdispersionen aus der Gruppe der Styrolacrylharze sind beispielsweise unter den Handelsnamen Joncryl HPD 496 MEA ¹⁰⁾ und Joncryl HPD 396 MEA ¹¹⁾ erhältlich und weisen nachfolgende Charakteristika auf:

**Joncryl HPD 496 MEA:**

| | |
|---|---|
| Brookfield-Viskosität (25 °C): | 700 mPas |
| pH-Wert: | 8,5 |
| Säurezahl (Feststoff) : | 178 |
| Dichte (25 °C): | 1,07 g/cm³ |
| Glasübergangstemperatur T_{g} (DSC) | 58 °C |

**Joncryl HPD 396 MEA:**

| | |
|---|---|
| Brookfield-Viskosität (25 °C): | 500 mPas |
| pH-Wert: | 8,3 |
| Säurezahl (Feststoff) : | 185 |
| Dichte (25 °C): | 1,07 g/cm³ |
| Glasübergangstemperatur T_{g} (DSC) | 91 °C |

Der Zucker bzw. Zuckeralkohol sorgt auf dem Aquarellpapier dafür, dass sich die Farbpigmente und das Bindemittel vermehrt an den Zuckermolekülen und weniger häufig an den Papierfasern anlagern. Da Zuckerderivate sehr gut wasserlöslich sind, verbessern diese außerdem die Aquarellierbarkeit. Hierbei kommen insbesondere Fructose, Glucose, Mannose, Invertzucker, Saccharose, Sorbit, Xylit und/oder Mannit zum Einsatz. Die Verwendung eines einzigen Zuckers oder Zuckeralkohols ist ebenso denkbar, wie der Einsatz zweier oder mehrerer Zucker oder Zuckeralkohole in Kombination.

Die Pigmentpräparation ist vorzugsweise in einer Konzentration von 1 bis 30 Gew. %, insbesondere in einer Konzentration von 1 bis 25 Gew. % in der Schreib-, Markier- und/oder Zeichenflüssigkeit enthalten. Die Pigmentpräparation weist dabei insbesondere einen Feststoffgehalt zwischen 30 und 60 Gew. % auf. Bei einem solchen Anteil an Pigmenten in der Schreib-, Markier- und/oder Zeichenflüssigkeit lassen sich diese ausreichend homogen innerhalb der Schreib-, Markier- und/oder Zeichenflüssigkeit verteilen und die Schreib-, Markier- und/oder Zeichenflüssigkeit zeigt eine gute Lagerstabilität.

Innerhalb der Pigmentpräparation können organische Pigmente, z.B. Phthalocyanin oder Azopigmente und/oder anorganische Pigmente, z.B. Titandioxid oder Ruß enthalten sein. Dabei zeigen insbesondere organische Pigmente in der Schreib-, Markier- und/oder Zeichenflüssigkeit eine geringere Sedimentationsneigung, sodass sich der Einsatz organischer Pigmente hinsichtlich der Lagerstabilität als besonders vorteilhaft herausgestellt hat.

Damit die Kapillarkanäle nicht verstopfen, müssen die verwendeten Pigmente relativ klein sein. Typischerweise kommen daher Pigmente mit einer Teilchengröße ≤ 6 µm bei D90 in Frage.

Ferner hat es sich als vorteilhaft erwiesen, wenn das Bindemittel in einer Konzentration von 1 bis 30 Gew. %, insbesondere in einer Konzentration von 2 bis 25 Gew. % in der Schreib-, Markier- und/oder Zeichenflüssigkeit enthalten ist. Gerade bei diesen Konzentrationen zeigt sich ein verbessertes Migrationsverhalten der Schreib-, Markier- und/oder Zeichenflüssigkeit.

Der Schreib-, Markier- und/oder Zeichenflüssigkeit wird ferner zumindest eine Base zugesetzt, wobei als Base bevorzugt Amine, besonders bevorzugt Monoethanolamin und/oder Triethanolamin, verwendet werden.

In einer vorteilhaften Ausgestaltung ist die Base in einer Konzentration von 0,5 bis 20,0 Gew. %, insbesondere in einer Konzentration von 0,5 bis 15,0 Gew. % enthalten. Ist die Base der der Schreib-, Markier- und/oder Zeichenflüssigkeit mit einem solchen Anteil zugesetzt, lässt sich der pH-Wert im neutralen bis leicht alkalischen Bereich zuverlässig stabilisieren, wodurch ein Ausfällen bzw. eine Sedimentation der Pigmente verhindert bzw. verringert wird. Des Weiteren sorgt die Base dafür, dass die auf dem Papier, insbesondere Aquarellpapier aufgetragene Schreib-, Markier- und/oder Zeichenflüssigkeit bzw. Aquarelltinte auch nach mehreren Tagen noch wasservermalbar ist.

Ein vorteilhafter Anteil des Dispergiernetzmittels in der Schreib-, Markier- und/oder Zeichenflüssigkeit ist dann gegeben, wenn dieses in einer Konzentration von 0,2 bis 10,0 Gew. %, insbesondere in einer Konzentration von 0,2 bis 4,0 Gew. % enthalten ist.

Bei einer bevorzugten Einsatzkonzentration eines Zuckers oder Zuckeralkohols oder einer Mischung aus Zuckern und/oder Zuckeralkoholen liegt dessen bzw. deren Anteil an der Schreib-, Markier- und/oder Zeichenflüssigkeit bei 0,5 bis 12 Gew. %.

Ebenfalls als vorteilhaft herausgestellt hat sich die Zugabe zumindest eines Konservierungsmittels als Additiv, wobei dieses insbesondere in einer Konzentration von maximal 1,5 Gew. % in der Schreib-, Markier- und/oder Zeichenflüssigkeit enthalten ist. Zweckmäßigerweise werden als Konservierungsmittel eines oder mehrere aus Formaldehydabspalter, Phenoxyethanol, Parabene und Isothiazolinone verwendet.

Ein geeignetes Konservierungsmittel, welches einen Formaldehyabspalter darstellt, ist beispielsweise unter dem Handelsnamen ACTICIDE SR 7034 ¹²⁾ erhältlich. Das bekannte Konservierungsmittel ist ein Biozid auf Basis von 1,6-Dihydroxi-2,5-dioxahexan und Tetramethylolacetylendiharnstoff, wobei 1,6-Dihydroxi-2,5-dioxahexan zu Formaldehyd und Ethylenglycol unter Umweltbedingungen hydrolisiert. Ein weiteres geeignetes Konservierungsmittel ist beispielsweise unter dem Handelsnamen ACTICIDE LT2 ¹³⁾ erhältlich. Das Konservierungsmittel ist ein Isothiazolinonbasiertes Biozid, welches 2-Brom-2-nitropropan-1,3-diol und 2-Octyl-2H-isothiazol-3-on enthält.

Der verbleibende Teil der Zusammensetzung der Schreib-, Markier- und/oder Zeichenflüssigkeit entfällt auf Wasser, insbesondere ist Wasser in einer Konzentration von 40 bis 85 Gew. %, besonders bevorzugt in einer Konzentration von 40 bis 80 Gew.-% enthalten.

Die Schreib-, Markier- und/oder Zeichenflüssigkeit wird in einem Auftragsgerät, insbesondere einem Auftragsgerät mit einem Kapillarsystem verwendet. Das Auftragsgerät, insbesondere ein Schreib-, Markier- oder Zeichengerät, weist hierfür eine Ausgestaltung mit den Merkmalen gemäß Anspruch 13 auf und umfasst eine Schreib-, Markier- oder Zeichenspitze aus einem kapillaren Material und einen eine Schreib-, Markier- und/oder Zeichenflüssigkeit mit den vorstehend beschriebenen Eigenschaften enthaltenden Speicher aus einem kapillaren Material.

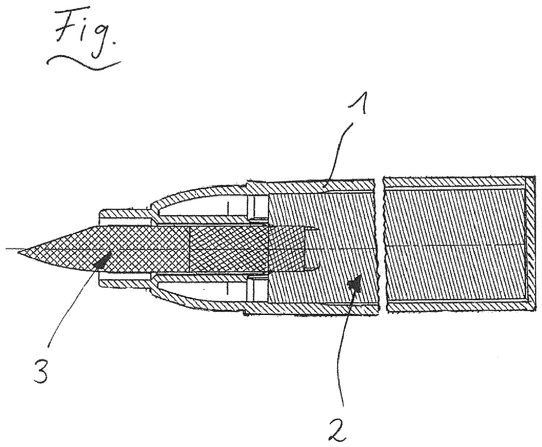

Die Erfindung wird nun nachfolgend anhand von Ausführungsbeispielen und einer Zeichnung (Fig. 1), die ein kapillares Auftragsgerät in Längsschnittdarstellung zeigt, näher erläutert.

Das Auftragsgerät ist im Wesentlichen stiftförmig und weist einen Schaft 1 auf, in dem ein Speicher 2 aus einem kapillaren Material bzw. ein Faserspeicher geringer Dichte, z.B. ein Polyesterfaserspeicher vorhanden ist. Das vordere Stiftende trägt eine Schreibspitze 3 aus einem kapillaren Material bzw. eine Faserspitze, die mit ihrem hinteren Ende mit dem Faserspeicher 2 in Verbindung steht bzw. in diesen hineinragt.

Die Herstellung der Schreib-, Markier- und/oder Zeichenflüssigkeit erfolgt überwiegend in Mischkesseln, in welchen die Bestandteile der Schreib-, Markier- und/oder Zeichenflüssigkeit zugegeben werden. Dabei wird ständig mittels Rührwerkzeugen intensiv miteinander zu vermischen und ausreichend gleichmäßig zu verteilen. Anschließend wird die so erhaltene Schreib-, Markier- und/oder Zeichenflüssigkeit in den Speicher 2 aus kapillarem Material des oben beschriebenen Schreibgerätes eingefüllt.

Bei der Durchführung der Versuche wurde die Schreib-, Markier- und/oder Zeichenflüssigkeit mit dem Auftragsgerät auf verschiedene Unterlagen, unter anderem auf Aquarellpapier und Zeichenkarton, appliziert. Nach einer kurzen Antrocknungszeit von mindestens 1 Minute, wurde der erzeugte Aufstrich mittels eines weiteren Auftragsgerätes, vorliegend einem feuchten Pinsel, behandelt. Anschließend wurde der Aufstrich insbesondere hinsichtlich seiner Aquarellierbarkeit bewertet.

Nachfolgend sind fünf Beispielrezepturen für Schreib-, Markier- und/oder Zeichenflüssigkeiten angeführt. Die Angaben in den Beispielrezepturen in Gewichtsprozent beziehen sich jeweils auf die Gesamtmasse der Schreib-, Markier- und/oder Zeichenflüssigkeit.

### Beispiel 1:

Beispielrezeptur für eine schwarze, pigmentierte, aquarellierbare Schreib-, Markier- und/oder Zeichenflüssigkeit mit einer Viskosität von 4,0 mPas (Brookfield, 20 °C, Kegel-Platte CPE-40) und einem pH-Wert von 8,2:

| | |
|---|---|
| Hostatint Black GR 500 ²⁾ | 16,5 Gew. % |
| Erkamar 4170 ⁸⁾ | 10,0 Gew. % |
| Monoethanolamin | 2,9 Gew. % |
| Tego Dispers 750 W ¹⁾ | 2,0 Gew. % |
| Sorbit | 0,8 Gew. % |
| Acticide SR 7034 ¹²⁾ | 0,5 Gew. % |
| Acticide LT2 ¹³⁾ | 0,3 Gew. % |
| Wasser demineralisiert | 67,0 Gew. % |

Bei der Herstellung der Schreib-, Markier- und/oder Zeichenflüssigkeit gemäß Beispiels 1 wird das Feststoffharz Erkamar 4170 mit Monoethanolamin im wässrigen Milieu unter leichtem Erwärmen in eine wasserlösliche Form überführt. Eine Schreib-, Markier- und/oder Zeichenflüssigkeit mit einer Zusammensetzung entsprechend Beispiel 1 weist einen geringen Anteil an Zuckeralkohol und einen hohen Anteil an wässriger Pigmentpräparation auf. Dadurch lassen sich besonders farbintensive Aufstriche, insbesondere auch noch nach Anwendung von Aquarelltechniken, erzeugen.

### Beispiel 2:

Beispielrezeptur für eine gelbe, pigmentierte, aquarellierbare Markierflüssigkeit mit einer Viskosität von 3,5 mPas (Brookfield, 20 °C, Kegel-Platte CPE-40) und einem pH-Wert von 8,8:

| | |
|---|---|
| Colanyl Yellow 5 GX 500 ³⁾ | 16,5 Gew. % |
| Rokrapol 7095 ⁹⁾ | 10,0 Gew. % |
| Monoethanolamin | 1,6 Gew. % |
| Triethanolamin | 1,6 Gew. % |
| Tego Dispers 750 W ¹⁾ | 0,5 Gew. % |
| Glucose | 1,5 Gew. % |
| Acticide SR 7034 ¹²⁾ | 0,8 Gew. % |
| Wasser demineralisiert | 67,5 Gew. % |

Auch hier wird das Feststoffharz Rokrapol 7095 bei der Herstellung der Schreib-, Markier- und/oder Zeichenflüssigkeit mit Monoethanolamin im wässrigen Milieu unter leichtem Erwärmen in eine wasserlösliche Form überführt. Eine Schreib-, Markier- und/oder Zeichenflüssigkeit mit einer Zusammensetzung entsprechend Beispiel 2 weist den geringsten Gehalt an Dispergiernetzmittel auf, dennoch lässt sich eine ausreichende Verteilung und Stabilisierung der Pigmente und eine akzeptable Lagerstabilität erreichen. Der Zusatz von Triethanolamin verbessert insbesondere die Langzeit-Wasservermalbarkeit.

### Beispiel 3:

Beispielrezeptur für einer rote, pigmentierte, aquarellierbare Markierflüssigkeit mit einer Viskosität von 5,5 mPas (Brookfield, 20 °C, Kegel-Platte CPE-40) und einem pH-Wert von 8,3:

| | |
|---|---|
| Hostafine Rot HF3S ⁵⁾ | 10,0 Gew. % |
| Hostafine Magenta E ⁵⁾ | 5,0 Gew. % |
| Joncryl HPD 496 MEA ¹⁰⁾ | 16,0 Gew. % |
| Triethanolamin | 1,0 Gew. % |
| Tego Dispers 750 W ¹⁾ | 1,0 Gew. % |
| Saccharose | 10,0 Gew. % |
| Acticide SR 7034 ¹²⁾ | 0,5 Gew. % |
| Acticide LT2 ¹³⁾ | 0,3 Gew. % |
| Wasser demineralisiert | 56,2 Gew. % |

Als Bindemittel wird vorliegend eine 35%-ige Harzlösung (Joncryl HPD 496 MEA ¹⁰⁾) eingesetzt, der Bindemittelgehalt beträgt somit nur 5,6% Feststoff. Eine Schreib-, Markier- und/oder Zeichenflüssigkeit mit einer Zusammensetzung entsprechend Beispiel 3 weist ferner einen gegenüber den vorhergehenden Beispielen erhöhten Zuckeranteil auf. Die Zusammensetzung zeigt sowohl eine gute Lagerstabilität als auch Aquarellierbarkeit.

### Beispiel 4:

Beispielrezeptur für eine blaue, pigmentierte, aquarellierbare Markierflüssigkeit mit einer Viskosität von 3,9 mPas (Brookfield, 20 °C, Kegel-Platte CPE-40) und einem pH-Wert von 8,9:

| | |
|---|---|
| Hostafine Blau B2G ⁵⁾ | 3,8 Gew. % |
| Hostafine Magenta E ⁵⁾ | 3,7 Gew. % |
| Joncryl HPD 496 MEA ¹⁰⁾ | 16,0 Gew. % |
| Monoethanolamin | 3,0 Gew. % |
| Tego Dispers 750 W ¹⁾ | 2,0 Gew. % |
| Fructose | 6,0 Gew. % |
| Acticide LT2 ¹³⁾ | 0,8 Gew. % |
| Wasser demineralisiert | 64,7 Gew. % |

Eine Schreib-, Markier- und/oder Zeichenflüssigkeit mit einer Zusammensetzung entsprechend Beispiel 4 enthält einen vergleichsweise geringen Anteil an Pigmenten, zeigt jedoch weiterhin gute Aquarellierbarkeit sowie eine gute Lagerstabilität.

### Beispiel 5:

Beispielrezeptur für eine violette, pigmentierte, aquarellierbare Markierflüssigkeit mit einer Viskosität von 5,5 mPas (Brookfield, 20 °C, Kegel-Platte CPE-40) und einem pH-Wert von 7,8:

| | |
|---|---|
| Colanylviolett RL 500 ³⁾ | 7,9 Gew. % |
| Joncryl HPD 396 MEA ¹¹⁾ | 20,0 Gew. % |
| Monoethanolamin | 0,5 Gew. % |
| Tego Dispers 750 W ¹⁾ | 2,0 Gew. % |
| Glucose | 10,0 Gew. % |
| Acticide SR 7034 ¹²⁾ | 0,8 Gew. % |
| Wasser demineralisiert | 58,8 Gew. % |

Eine Schreib-, Markier- und/oder Zeichenflüssigkeit mit einer Zusammensetzung entsprechend Beispiel 5 weist den vergleichsweise geringsten Anteil an einer Base, vorliegend Monoethanolamin auf, der dennoch ausreichend ist einen leicht alkalischen pH-Wert einzustellen, um die Tinte zu stabilisieren. Ferner sorgt der vergleichsweise hohe Zuckeranteil in Kombination mit dem eingesetzten Bindemittel, eine 35%ige Harzlösung, deren Bindemittelgehalt ca. 6,4% Feststoff beträgt, für eine gute Aquarellierbarkeit.

### Hersteller:

- 1): Evonik Industries AG, Goldschmidtstr. 100, 45127 Essen
- 2), 3), 4), 5): Clariant AG, Industriepark Höchst, 65926 Frankfurt
- 6): Heubach GmbH, Heubachstraße 7, 38685 Langelsheim
- 7): Lanxess AG, Kennedyplatz 1, 50569 Köln
- 8), 9): Robert Kraemer GmbH & Co. KG, Zum roten Hahn 9, 26180 Rastede
- 10), 11): BASF AG, BASF BV Resins and Additives PO. Box 390, 844AJ Heerenveen, Niederlande
- 12), 13): Thor GmbH, Landwehrstraße 1, 67346 Speyer, Deutschland

## Patentansprüche

1. Wässrige, pigmentierte und aquarellierbare Schreib-, Markier- und/oder Zeichenflüssigkeit, für Kapillarsysteme, insbesondere für Auftragsgeräte mit einem Kapillarsystem, die eine Viskosität von weniger als 40 mPas, insbesondere weniger als 10 mPas (Brookfield, 20 °C, Kegel-Platte CPE-40) aufweist, enthaltend
- eine wässrige Pigmentpräparation,
- ein Bindemittel, wobei das Bindemittel ein wasserlösliches Harz und/oder eine Kunststoffdispersion aus der Gruppe modifizierter, niedermolekularer Maleinatharze und/oder eine Kunststoffdispersion aus der Gruppe Styrolacrylharze und/oder ein gesättigtes Polyesterharz ist,
- eine Base,
- ein Dispergiernetzmittel, wobei als Dispergiernetzmittel eine wässrige Lösung eines modifizierten Polymers mit pigmentaffinen Gruppen enthalten ist, und
- einen Zucker und/oder Zuckeralkohol.

2. Schreib-, Markier- und/oder Zeichenflüssigkeit nach Anspruch 1, wobei die Pigmentpräparation in einer Konzentration von 1 bis 30 Gew. %, insbesondere in einer Konzentration von 1 bis 25 Gew. % enthalten ist.

3. Schreib-, Markier- und/oder Zeichenflüssigkeit nach einem der Ansprüche 1 oder 2, wobei die Pigmentpräparation einen Feststoffgehalt zwischen 30 und 60 Gew. % aufweist.

4. Schreib-, Markier- und/oder Zeichenflüssigkeit nach einem der vorhergehenden Ansprüche, wobei die Pigmentpräparation organische und/oder anorganische Pigmente enthält.

5. Schreib-, Markier- und/oder Zeichenflüssigkeit nach einem der vorhergehenden Ansprüche, wobei das Bindemittel in einer Konzentration von 1 bis 30 Gew. %, insbesondere in einer Konzentration von 2 bis 25 Gew. % enthalten ist.

6. Schreib-, Markier- und/oder Zeichenflüssigkeit nach einem der vorhergehenden Ansprüche, wobei als Base ein Amin, insbesondere Monoethanolamin und/oder Triethanolamin, verwendet wird.

7. Schreib-, Markier- und/oder Zeichenflüssigkeit nach einem der vorhergehenden Ansprüche, wobei die Base in einer Konzentration von 0,5 bis 20,0 Gew. %, insbesondere in einer Konzentration von 0,5 bis 15,0 Gew. % enthalten ist.

8. Schreib-, Markier- und/oder Zeichenflüssigkeit nach einem der vorhergehenden Ansprüche, wobei das Dispergiernetzmittel in einer Konzentration von 0,2 bis 10,0 Gew. %, insbesondere in einer Konzentration von 0,2 bis 4,0 Gew. % enthalten ist.

9. Schreib-, Markier- und/oder Zeichenflüssigkeit nach einem der vorhergehenden Ansprüche, wobei Fructose, Glucose, Mannose, Invertzucker, Saccarose, Sorbit, Xylit und/oder Mannit enthalten sind.

10. Schreib-, Markier- und/oder Zeichenflüssigkeit nach einem der vorhergehenden Ansprüche, wobei Zucker und/oder Zuckeralkohol in einer Konzentration von 0,5 bis 12 Gew. % enthalten ist.

11. Schreib-, Markier- und/oder Zeichenflüssigkeit nach einem der vorhergehenden Ansprüche, enthaltend ein Konservierungsmittel.

12. Schreib-, Markier- und/oder Zeichenflüssigkeit nach Anspruch 11, wobei das Konservierungsmittel in einer Konzentration von maximal 1,5 Gew. % enthalten ist.

13. Auftragsgerät, insbesondere Schreib-, Markier- oder Zeichengerät mit einer Schreib-, Markier- oder Zeichenspitze (3) aus einem kapillaren Material und einem eine Schreib-, Markier- und/oder Zeichenflüssigkeit nach einem der vorhergehenden Ansprüche enthaltenden Speicher (2) aus einem kapillaren Material.

## Claims

1. Aqueous, pigmented and aquarellable writing-, marking- and/or drawing fluid for capillary systems, in particular for applicators having a capillary system, said fluid having a viscosity of less than 40mPas, in particular less than 10 mPas (Brookfield, 20°C, cone-plate CPE 40), containing
- an aqueous pigment preparation,
- a binding agent, wherein the binding agent is a watersoluble resin and/or a plastic dispersion from the group of modified, low-molecular maleic resins and/or a plastic dispersion from the group of styrene acrylic resins and/or a saturated polyester resin,
- a base,
- a dispersing wetting agent, wherein an aqueous solution of a modified polymer having pigment affinity groups is contained as the dispersing wetting agent, and
- a sugar and/or a sugar alcohol.

2. Writing-, marking- and/or drawing fluid according to claim 1, wherein the pigment preparation is contained in a concentration of from 1 to 30 wt.%, in particular in a concentration of from 1 to 25 wt.%.

3. Writing-, marking- and/or drawing fluid according to one of claims 1 or 2, wherein the pigment preparation has a solids content between 30 and 60 wt.%.

4. Writing-, marking- and/or drawing fluid according to one of the preceding claims, wherein the pigment preparation contains organic and/or inorganic pigments.

5. Writing-, marking- and/or drawing fluid according to one of the preceding claims, wherein the binding agent is contained in a concentration of from 1 to 30 wt.%, in particular in a concentration of from 2 to 25 wt.%.

6. Writing-, marking- and/or drawing fluid according to one of the preceding claims, wherein an amine, in particular monoethanolamine and/or triethanolamine, is used as a base.

7. Writing-, marking- and/or drawing fluid according to one of the preceding claims, wherein the base is contained in a concentration of from 0.5 to 20.0 wt.%, in particular in a concentration of from 0.5 to 15.0 wt.%.

8. Writing-, marking- and/or drawing fluid according to one of the preceding claims, wherein the dispersing wetting agent is contained in a concentration of from 0.2 to 10.0 wt.%, in particular in a concentration of from 0.2 to 4.0 wt.%.

9. Writing-, marking- and/or drawing fluid according to one of the preceding claims, wherein fructose, glucose, mannose, invert sugar, sucrose, sorbitol, xylitol and/or mannitol are contained.

10. Writing-, marking- and/or drawing fluid according to one of the preceding claims, wherein sugar and/or sugar alcohol is contained in a concentration of from 0.5 to 12 wt.%.

11. Writing-, marking- and/or drawing fluid according to one of the preceding claims, containing a preservative.

12. Writing-, marking- and/or drawing fluid according to claim 11, wherein the preservative is contained in a concentration of maximum 1.5 wt.%.

13. Applicator, in particular writing-, marking- or drawing device having a writing-, marking- or drawing tip (3) made of a capillary material and having a storage element (2), made of a capillary material, containing a writing-, marking- and/or drawing fluid according to one of the preceding claims.

## Revendications

1. Liquide aqueux, pigmenté et aquarellable, d'écriture, de marquage et/ou de dessin, pour des systèmes capillaires, notamment pour des appareils d'application ayant un système capillaire, qui a une viscosité de moins de 40 mPas, notamment de moins de 10 mPas (Brookfield 20°C, cône-plaque CPE-40), contenant
- une préparation aqueuse de pigment,
- un liant, le liant étant une résine soluble dans l'eau et/ou une dispersion de matière plastique choisie dans le groupe des résines de maléate modifiée à bas poids moléculaire et/ou une dispersion de matière plastique choisie dans le groupe des résines de styrène acrylique et/ou d'une résine de polyester saturée,
- une base,
- un agent mouillant de dispersion, dans lequel, comme agent mouillant de dispersion, il est contenu une solution aqueuse d'un polymère modifié ayant des groupes affinés aux pigments, et
- un sucre et/ou un alcool-sucre.

2. Liquide d'écriture, de marquage et/ou de dessin suivant la revendication 1, dans lequel la préparation de pigment est contenue en une concentration de 1 à 30% en poids, notamment en une concentration de 1 à 20% en poids.

3. Liquide d'écriture, de marquage et/ou de dessin suivant la revendication 1 ou 2, dans lequel la préparation de pigment a une teneur en matière solide comprise entre 30 et 60% en poids.

4. Liquide d'écriture, de marquage et/ou de dessin suivant l'une des revendications précédentes, dans lequel la préparation de pigment contient des pigments organiques et/ou minéraux.

5. Liquide d'écriture, de marquage et/ou de dessin suivant l'une des revendications précédentes, dans lequel le liant est contenu en une concentration de 1 à 30% en poids, notamment en une concentration de 2 à 25% en poids.

6. Liquide d'écriture, de marquage et/ou de dessin suivant l'une des revendications précédentes, dans lequel on utilise comme base une amine, notamment la monoéthanolamine et/ou la triéthanolamine.

7. Liquide d'écriture, de marquage et/ou de dessin suivant l'une des revendications précédentes, dans lequel la base est contenue en une concentration de 0,5 à 20,0% en poids, notamment en une concentration de 0,5 à 15,0% en poids.

8. Liquide d'écriture, de marquage et/ou de dessin suivant l'une des revendications précédentes, dans lequel l'agent mouillant de dispersion est contenu en une concentration de 0,2 à 10,0% en poids, notamment en une concentration de 0,2 à 4,0% en poids.

9. Liquide d'écriture, de marquage et/ou de dessin suivant l'une des revendications précédentes, dans lequel il est contenu du fructose, du glucose, du mannose, du sucre interverti, du saccharose, du sorbitol, du xylitol et/ou du mannitol.

10. Liquide d'écriture, de marquage et/ou de dessin suivant l'une des revendications précédentes, dans lequel du sucre et/ou un alcool-sucre est contenu en une concentration de 0,5 à 12% en poids.

11. Liquide d'écriture, de marquage et/ou de dessin suivant l'une des revendications précédentes, contenant un agent de conservation.

12. Liquide d'écriture, de marquage et/ou de dessin suivant la revendication 11, dans lequel l'agent de conservation est contenu en une concentration de 1,5% en poids au maximum.

13. Appareil d'application, notamment appareil d'écriture, de marquage ou de dessin, contenant une pointe (3) d'écriture, de marquage ou de dessin et un réservoir (2) en une matière capillaire contenant une matière capillaire et un liquide d'écriture, de marquage et/ou de dessin suivant l'une des revendications précédentes.
